# EUROPEAN PATENT APPLICATION

(11) **EP 3 674 369 A1**
(43) Date of publication of application: **01.07.2020**
(21) Application number: 18847708.7
(22) Date of filing: 20.08.2018
(51) Int. Cl.: C08L 101/14, C08J 5/18

(54) **WATER ABSORBENT RESIN DISPERSION LIQUID, WATER ABSORBENT RESIN COATING FILM AND METHOD FOR PRODUCING SAME**

(30) Priority: 21.08.2017 JP 2017158780
(71) Applicant: Sumitomo Seika Chemicals Co., Ltd., Kako-gun, Hyogo 675-0145 (JP)
(72) Inventor: IDO, Toru, Himeji-shi Hyogo 672-8076 (JP)
(74) Representative: Vossius & Partner Patentanwälte Rechtsanwälte mbB
(86) International application number: PCT/JP2018/030628
(87) International publication number: WO 2019/039426

(57) **Abstract**

Provided is a water-absorbent resin dispersion that is capable of maintaining the dispersibility of a water-absorbent resin more readily than conventional dispersions.

The water-absorbent resin dispersion of the present invention comprises a water-absorbent resin, a thickener, and an organic solvent, the thickener being dissolved in the organic solvent, and the water-absorbent resin being dispersed in the organic solvent. The water-absorbent resin dispersion of the present invention is capable of maintaining the dispersibility of a water-absorbent resin more readily than conventional dispersions.

## Description

### Technical Field

The present invention relates to a water-absorbent resin dispersion, a water-absorbent resin coating film, and a method for producing the film.

### Background Art

In recent years, water-absorbent resins have been widely used in various fields, including hygienic materials such as disposable diapers and sanitary napkins; agricultural and horticultural materials such as water-retaining agents and soil conditioners; and industrial materials such as water-blocking agents, and agents for preventing dew condensation. Known examples of such water-absorbent resins are hydrolysates of starch-acrylonitrile graft copolymers, neutralized products of starch-acrylic acid graft polymers, saponified products of vinyl acetate-acrylic ester copolymers, crosslinked products of partially neutralized acrylic acid polymers, and the like.

Such a water-absorbent resin may be used, for example, in the form of a dispersion in which the resin is dispersed in a solvent (referred to as a "water-absorbent resin dispersion"). For example, a coating film containing a water-absorbent resin can be formed using a water-absorbent resin dispersion. More specifically, water-absorbent resin dispersions are applied to, for example, various coating agents in addition to fiber treatment agents for forming a coating film on fibers.

As a water-absorbent resin dispersion, for example, a dispersion in which a water-absorbent resin is dispersed in a PVC plastisol is known, and used as a treatment agent for treating a nonwoven fabric or the like. For example, Patent Literature 1 discloses a dispersion obtained by dispersing a surfactant, a powdery water-absorbent resin, finely powdered silica, and organic bentonite in a petroleum-based hydrocarbon. In this dispersion, sedimentation of the water-absorbent resin or cake solidification in the solvent can be suppressed.

### Citation List

### Patent Literature

PTL 1: JPH11-092565A

### Summary of Invention

### Technical Problem

However, when conventional water-absorbent resin dispersions are stored in a state in which they are allowed to stand for a long period of time, the water-absorbent resin in the water-absorbent resin dispersions tends to gradually, for example, settle and agglomerate, which reduces dispersion stability. In the dispersion disclosed in Patent Literature 1, although the dispersion stability of the water-absorbent resin is increased by silica or the like, sedimentation tends to occur in a relatively short period of time, and thus a problem remains in terms of maintaining the dispersion stability of the water-absorbent resin for a longer period of time. If the dispersion stability of a water-absorbent resin dispersion is poor, for example, aggregates of the water-absorbent resin are scattered in a coating film formed from the dispersion; accordingly, sufficient absorption ability, adhesion ability, etc., cannot be obtained. From this point of view, a water-absorbent resin dispersion capable of maintaining the dispersion stability for a longer period of time is desired.

The present invention has been accomplished in view of the above. An object of the present invention is to provide a water-absorbent resin dispersion that is capable of maintaining the dispersibility of a water-absorbent resin more readily than conventional dispersions. Another object of the present invention is to provide a water-absorbent resin coating film formed from the water-absorbent resin dispersion, and a method for producing the film.

### Solution to Problem

The present inventors conducted extensive research to achieve the above objects, and found that the above objects can be achieved by dispersing a water-absorbent resin in an organic solvent in which a thickener is dissolved. The present invention has been accomplished based on this finding.

Specifically, the present invention includes, for example, the inventions described in the following items.

Item 1. A water-absorbent resin dispersion comprising a water-absorbent resin, a thickener, and an organic solvent, the thickener being dissolved in the organic solvent, the water-absorbent resin being dispersed in the organic solvent.

Item 2. The water-absorbent resin dispersion according to Item 1, wherein the organic solvent is at least one member selected from the group consisting of C₁₋₅ alcohol compounds, benzene, toluene, xylene, ethylene carbonate, propylene carbonate, tetrahydrofuran, 1,4-dioxane, acetone, methyl ethyl ketone, acetonitrile, 1,2-dichloroethane, chloroform, and dimethylformamide.

Item 3. The water-absorbent resin dispersion according to Item 1 or 2, wherein the thickener is present in an amount of 0.5 to 50 parts by mass, per 100 parts by mass of the organic solvent.

Item 4. The water-absorbent resin dispersion according to any one of Items 1 to 3, wherein the water-absorbent resin is present in an amount of 5 to 50 parts by mass, per 100 parts by mass of the organic solvent.

Item 5. The water-absorbent resin dispersion according to any one of Items 1 to 4, wherein the thickener has a viscosity of 200 to 10000 mPa·s when dissolved in the organic solvent.

Item 6. A water-absorbent resin coating film comprising the water-absorbent resin dispersion according to any one of Items 1 to 5 that is dried.

Item 7. A method for producing a water-absorbent resin coating film, comprising drying the water-absorbent resin dispersion according to any one of Items 1 to 5 to form a coating film.

### Advantageous Effects of Invention

The water-absorbent resin dispersion of the present invention can maintain the dispersibility of a water-absorbent resin more readily than conventional dispersions.

### Description of Embodiments

Embodiments of the present invention are described in detail below. In the present specification, the terms "comprise" and "contain" include the concepts of "comprise," "contain," "consist essentially of," and "consist of."

The water-absorbent resin dispersion of the present invention comprises a water-absorbent resin, a thickener, and an organic solvent. In the water-absorbent resin dispersion of the present invention, the thickener is dissolved in the organic solvent, and the water-absorbent resin is dispersed in the organic solvent.

The type of water-absorbent resin is not particularly limited. For example, various known water-absorbent resins are usable. The water-absorbent resin may be a natural polymer or a synthetic polymer.

Specific examples of the water-absorbent resin include acrylic polymers such as sodium poly(meth)acrylate crosslinked products and sodium (meth)acrylate-vinyl alcohol copolymers; saponified products of poly(meth)acrylonitrile-containing polymers; polyvinyl alcohol crosslinked products; maleic anhydride-containing copolymers; vinylpyrrolidone-containing copolymers; polyoxyethylene crosslinked products; polyethers such as polyethylene glycol-di(meth)acrylate crosslinked polymers; polyamides; starch-containing polymers such as hydrolysates of starch-acrylonitrile graft polymers, starch-acrylic acid graft polymers, starch-styrene sulfonic acid graft polymers, starch-vinylsulfonic acid graft polymers, and starch-acrylamide graft polymers; cellulose-containing polymers such as cellulose-acrylonitrile graft polymers, cellulose-styrene sulfonic acid graft polymers, and carboxymethyl cellulose crosslinked products; polysaccharides such as hyaluronic acid and agarose; proteins such as collagen; and the like. The term "(meth)acryl" means acryl or methacryl.

The water-absorbent resin may be a commercially available product. Examples include "AQUA KEEP" (registered trademark) produced by Sumitomo Seika Chemicals Co., Ltd., and the like. The production method for the water-absorbent resin is not particularly limited, and various water-absorbent resins produced by known production methods can be used in the present invention.

The shape of the water-absorbent resin is not particularly limited. For example, the water-absorbent resin may be in a particulate form. When the water-absorbent resin is in a particulate form, the average particle diameter of the water-absorbent resin is not particularly limited. From the viewpoint of ease of enhancing the dispersion stability of the water-absorbent resin dispersion, the average particle diameter of the water-absorbent resin is preferably 1 to 1000 pm, more preferably 5 to 850 µm, and particularly preferably 10 to 350 µm. The average particle diameter as used herein refers to a volume average particle diameter measured by a laser diffraction scattering method.

When the water-absorbent resin is in a particulate form, the water-absorbent resin may be, for example, spherical particles, ellipsoidal particles, or particles having an irregularly distorted irregular shape. The water-absorbent resin may be secondary particles formed by aggregation of primary particles.

The type of organic solvent is not particularly limited as long as it is capable of dispersing the water-absorbent resin, and capable of dissolving the thickener described later. Examples of the organic solvent include aromatic hydrocarbons such as C₁₋₅ alcohol compounds, benzene, toluene, and xylene; esters such as ethylene carbonate and propylene carbonate; ethers such as tetrahydrofuran and 1,4-dioxane; ketones such as acetone and methyl ethyl ketone; acetonitrile; 1,2-dichloroethane; chloroform; dimethylformamide; and the like. As the organic solvent, only one organic solvent may be used, or a mixed solvent of two or more organic solvents may be used. The organic solvent may contain water as long as it is capable of dispersing the water-absorbent resin, and capable of dissolving the thickener described later.

The organic solvent is preferably a C₁₋₅ alcohol compound. In this case, the thickener is readily dissolved, the dispersion stability of the water-absorbent resin is readily improved, and sedimentation etc. is less likely to occur.

Examples of the C₁₋₅ alcohol compound include methanol, ethanol, n-propanol, isopropanol, n-butanol, tert-butanol, and the like. The C₁₋₅ alcohol compound is preferably methanol or ethanol, from the viewpoint of ease of dissolving the thickener; improving, in particular, the dispersion stability of the water-absorbent resin; and forming the water-absorbent resin coating film described later.

The type of thickener is not particularly limited, and various known thickeners can be used. Examples of the thickener include polyvinyl alcohol; polyvinylpyrrolidone; polyethylene oxide; hydroxyethyl cellulose; hydroxypropyl cellulose; methylcellulose; carboxymethylcellulose; polyacrylic acid; (partially) neutralized polyacrylic acid; polyethylene glycol; polyacrylamide; polyethyleneimine; dextrin; sodium alginate; a modified polyalkylene oxide obtained by reacting a polyalkylene oxide compound, a diol compound, and a diisocyanate compound; a viscous composition containing an alkyl-modified carboxyl-group-containing water-soluble polymer and a modified urethane associative polyalkylene oxide; and the like. These thickeners may be used singly, or in a combination of two or more.

It is preferable that the polyalkylene oxide compound in the modified polyalkylene oxide contain 90 mass% or more of an ethylene oxide group, and have a number average molecular weight of 5000 to 50000.

Examples of the diol compound in the modified polyalkylene oxide include ethylene glycol, diethylene glycol, triethylene glycol, tetraethylene glycol, propylene glycol, dipropylene glycol, trimethylene glycol, 1,3-butanediol, 2,3-butanediol, 1,4-butanediol, 1,5-pentanediol, 1,6-hexanediol, and 1,9-nonanediol, and the like.

The diisocyanate compound in the modified polyalkylene oxide is not particularly limited, as long as it contains two isocyanate groups (-NCO) in the same molecule. Examples thereof include 4,4'-diphenylmethane diisocyanate (MDI), 1,6-hexamethylene diisocyanate (HDI), dicyclohexylmethane-4,4'-diisocyanate (HMDI), 3-isocyanatomethyl-3,5,5-trimethylcyclohexyl isocyanate (IPDI), 1,8-dimethylbenzol-2,4-diisocyanate, 2,4-tolylene diisocyanate (TDI), and the like.

The alkyl-modified carboxyl-group-containing water-soluble polymer in the viscous composition is a copolymer obtained by polymerizing 100 parts by mass of an α,β-unsaturated carboxylic acid compound, 0.5 to 20 parts by mass of a C₁₀₋₃₀ alkyl-containing (meth)acrylic acid alkyl ester, and greater than 0.1 parts by mass and not more than 2 parts by mass of a compound containing two or more ethylenically unsaturated groups.

Examples of the α,β-unsaturated carboxylic acid compound include acrylic acid, methacrylic acid, crotonic acid, maleic acid, itaconic acid, fumaric acid, and the like. These α,β-unsaturated carboxylic acid compounds may be used singly, or in a combination of two or more. The C₁₀₋₃₀ alkyl-containing (meth)acrylic acid alkyl ester refers to an ester compound formed by reacting (meth) acrylic acid and a C₁₀₋₃₀ alkyl-containing higher alcohol.

The modified urethane associative polyalkylene oxide may be preferably, for example, a compound having a structure represented by Formula (I) below: 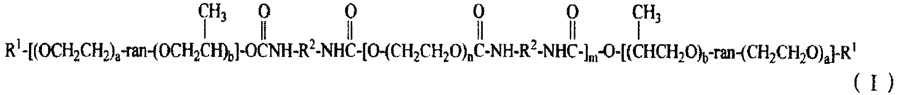 wherein R¹ represents linear C₁₅₋₂₄ alkyl; R² represents methyldiphenylene, hexamethylene, methyldicyclohexylene, 3-methyl-3,5,5-trimethylcyclohexylene, dimethylphenylene, or tolylene; [(OCH₂CH₂)ₐ-ran-(OCH₂CH(CH₃))_{b}] indicates that (OCH₂CH₂) and (OCH₂CH(CH₃)), which are constituent units, are randomly copolymerized and that the degrees of polymerization of the constituent units are represented by a and b, respectively; a represents an integer of 5 to 10; b represents an integer of 5 to 8; n represents an integer of 130 to 680; and m represents an integer of 1 to 4.

As the thickener, polyvinyl alcohol, polyvinylpyrrolidone, polyethylene oxide, the above-mentioned modified polyalkylene oxide, and the above-mentioned viscous composition are preferable, from the viewpoint of ease of dissolving such a thickener in the organic solvent, in particular the alcohol compound described above; and improving the dispersion stability of the water-absorbent resin. The polyethylene oxide may be, for example, a commercially available product, and examples thereof include "PEO" (registered trademark; Registration No. 0675009) produced by Sumitomo Seika Chemicals Co., Ltd., and the like. The modified polyalkylene oxide may be, for example, a commercially available product, and examples thereof include "AQUACALK" (registered trademark; Registration No. 2500113) produced by Sumitomo Seika Chemicals Co., Ltd., and the like. The viscous composition may be, for example, a commercially available product, and examples thereof include "AQUPEC" (registered trademark; Registration No. 1191660) HU series produced by Sumitomo Seika Chemicals Co., Ltd., and the like.

The weight average molecular weight of the thickener is not particularly limited; and is, for example, preferably 10000 to 15000000, more preferably 50000 to 10000000, and particularly preferably 100000 to 5000000, from the viewpoint of excellent solubility and ease of improving the dispersion stability of the water-absorbent resin. The weight average molecular weight is a value obtained by measurement by gel permeation chromatography (GPC) using standard polystyrene or standard polyethylene glycol.

The water-absorbent resin dispersion of the present invention comprises the water-absorbent resin, the thickener, and the organic solvent; and may further comprise additives, as long as the effect of the present invention is not impaired. Examples of additives include pH adjusters, light stabilizers, antioxidants, preservatives, surfactants, fillers such as inorganic particles, flame retardants, pigments, coloring agents, fungicides, lubricants, and the like. The water-absorbent resin dispersion may contain one, or two or more of these additives.

The water-absorbent resin dispersion of the present invention preferably contains the thickener in an amount of 0.5 to 50 parts by mass, per 100 parts by mass of the organic solvent. In this case, the dispersion stability of the water-absorbent resin in the water-absorbent resin dispersion can be readily maintained, and the solubility in the organic solvent is excellent. The thickener is present in an amount of more preferably 1 to 40 parts by mass, and even more preferably 5 to 30 parts by mass, per 100 parts by mass of the organic solvent.

The water-absorbent resin dispersion of the present invention preferably contains the water-absorbent resin in an amount of 5 to 50 parts by mass, per 100 parts by mass of the organic solvent. In this case, the dispersion stability of the water-absorbent resin in the water-absorbent resin dispersion can be readily maintained, and a high water absorption ability can be achieved. The water-absorbent resin is present in an amount of more preferably 5 to 40 parts by mass, and even more preferably 5 to 30 parts by mass, per 100 parts by mass of the organic solvent.

The production method for the water-absorbent resin dispersion of the present invention is not particularly limited, and various known production methods can be used. For example, the water-absorbent resin dispersion of the present invention can be prepared by mixing the organic solvent, the water-absorbent resin, the thickener, and one or more additives added as necessary in predetermined proportions.

The mixing method is not particularly limited. For example, a known mixer such as a ball mill, a kneader, or a disperser; a stirrer with a stirring blade such as a paddle blade; or a dispersion machine can be used.

In the production method for the water-absorbent resin dispersion of the present invention, for example, the thickener can be dissolved in the organic solvent beforehand to prepare a thickener solution, and the thickener solution can be mixed with the water-absorbent resin to prepare a water-absorbent resin dispersion. Alternatively, the thickener can be dissolved in the organic solvent in a state in which the water-absorbent resin is present in the organic solvent.

In dissolving the thickener in the organic solvent, the temperature of the organic solvent can be appropriately set according to the solubility of the thickener in the organic solvent. For example, the thickener can be dissolved in the organic solvent at a temperature equal to or less than the boiling point of the organic solvent. Specifically, when the thickener is dissolved in the organic solvent, the temperature of the organic solvent may be 25 to 270°C, preferably 25 to 100°C, and more preferably 30 to 70°C. The means for adjusting the temperature of the organic solvent is not particularly limited; and various heating means, such as a known heating device and a thermostatic bath, can be used.

In the production method for the water-absorbent resin dispersion of the present invention, the viscosity of a thickener solution (not containing the water-absorbent resin) obtained by dissolving the thickener in the organic solvent is preferably 200 to 10000 mPa·s. The use of the thickener solution having a viscosity in this range makes it possible to more readily improve the dispersion stability of the water-absorbent resin in the obtained water-absorbent resin dispersion, helps to prevent sedimentation and aggregation of the water-absorbent resin over an extremely long period of time, and facilitates formation of a coating film from the water-absorbent resin dispersion. The viscosity of the thickener solution is preferably 300 to 7500 mPa·s, and more preferably 500 to 5000 mPa·s.

The viscosity of the thickener solution refers to the viscosity of a solution in which 0.5 to 50 parts by mass of the thickener is dissolved in 100 parts by mass of the organic solvent, and is a value determined at 30 to 50°C by using a B-type rotary viscometer.

In the water-absorbent resin dispersion of the present invention, the thickener dissolved in the organic solvent allows for suppression of aggregation and sedimentation of the water-absorbent resin, and makes it possible to maintain a stable dispersion state of the water-absorbent resin over a long period of time. Further, the water-absorbent resin dispersion of the present invention can maintain the stability of the water-absorbent resin dispersion without using a binder that does not have a water absorption ability, such as a PVC plastisol, which has been conventionally used. Thus, even when the water-absorbent resin dispersion of the present invention is applied to various uses, the original water absorption ability is less likely to be impaired.

The water-absorbent resin dispersion of the present invention is less likely to cause, for example, aggregation and sedimentation of the water-absorbent resin, and can maintain excellent dispersion stability over a long period of time. Thus, for example, a water-absorbent resin coating film in which the water-absorbent resin is uniformly distributed can be formed by using the water-absorbent resin dispersion of the present invention. With such a water-absorbent resin coating film, a stable water absorption ability, an excellent water-blocking effect, etc., can be expected.

In the water-absorbent resin dispersion of the present invention, the thickener may be precipitated and separated from the solvent at ordinary temperature (e.g., 25°C), depending on the type of thickener used. To maintain the dispersibility of such a water-absorbent resin dispersion, it is sometimes preferable to heat the water-absorbent resin dispersion, or sometimes necessary to heat the water-absorbent resin dispersion. When the heating is stopped, the thickener is precipitated, and the water-absorbent resin dispersion is solidified; however, the solidified water-absorbent resin dispersion may become liquid (that is, the thickener may be re-dissolved) when heated again.

By using the water-absorbent resin dispersion of the present invention, for example, a coating film containing the water-absorbent resin (water-absorbent resin coating film) can be formed.

The method for producing a coating film using the water-absorbent resin dispersion of the present invention is not particularly limited. For example, a water-absorbent resin coating film obtained from the water-absorbent resin dispersion of the present invention can be formed by a production method comprising a step of drying the water-absorbent resin dispersion of the present invention to form a coating film.

More specifically, a coating film can be formed by applying the water-absorbent resin dispersion of the present invention to a substrate, and drying the dispersion. The coating film thus formed contains the water-absorbent resin dispersion that is dried, and the coating film contains the water-absorbent resin.

Various known substrates used for coating film formation can be used as the substrate. Examples of substrates include glass substrates, metal substrates, resin substrates, resin films, nonwoven fabrics, fibrous sheets, and the like. In addition, for example, a coating film can be directly formed on a component or the like to which a water absorption ability and a water-blocking ability are to be imparted.

For example, various known coating means can be used for applying the water-absorbent resin dispersion. Examples thereof include a blade coater, a bar coater, screen printing, a dip coater (for example, a technique in which a substrate or a fiber is dipped in a dispersion to coat the surface), and the like.

After the water-absorbent resin dispersion is applied, drying can be performed by an appropriate method. The drying method is not particularly limited. For example, natural drying, hot-air drying, drying by heating using a heater such as an oven, or the like can be performed. Drying conditions such as drying temperature and drying time are not particularly limited, and known drying conditions can be widely used. The volatile components, such as the organic solvent of the water-absorbent resin dispersion, are evaporated by drying, and a coating film containing the water-absorbent resin dispersion that is dried is formed.

The total content of the water-absorbent resin and the thickener contained in the water-absorbent resin coating film is, for example, 50 mass% or more, preferably 80 mass% or more, more preferably 90 mass% or more, and particularly preferably 99 mass% or more. Moreover, the water-absorbent resin coating film may be formed of only the water-absorbent resin and the thickener.

The thickness of the water-absorbent resin coating film is not particularly limited, and can be set to a desired thickness according to the intended use. For example, the thickness of the water-absorbent resin coating film may be 10 to 1000 µm.

The water-absorbent resin dispersion of the present invention can be suitably used in various fields, including hygienic materials such as disposable diapers and sanitary napkins; agricultural and horticultural materials such as water-retaining agents and soil conditioners; and industrial materials such as water-blocking agents, and agents for preventing dew condensation.

### Examples

The present invention is described in more detail below with reference to Examples; however, the present invention is not limited to these Examples.

### Example 1

5 parts by mass of polyethylene oxide (PEO-3 produced by Sumitomo Seika Chemicals Co., Ltd.) was added to 100 parts by mass of absolute ethanol heated to 50°C, and the mixture was stirred with a paddle blade (6 cmΦ, 200 rpm) for 1 hour to prepare a thickener solution. The viscosity of the thickener solution was 4300 mPa·s (B-type rotary viscometer produced by Tokimec Inc., rotor No. 2, 12 rpm, 3 min, 50°C). A water-absorbent resin (AQUA KEEP 10SH 1000 µm pass product (produced by Sumitomo Seika Chemicals Co., Ltd.), which was passed through a 1000 µm sieve) was added to the thickener solution so that the amount of the resin was 10 parts by mass, per 100 parts by mass of absolute ethanol in the thickener solution. The mixture was stirred for 10 minutes to prepare a water-absorbent resin dispersion.

This water-absorbent resin dispersion was placed on a PET sheet, and applied using 1000 µm and 80 µm bar coaters. The sheet to which the dispersion was applied was dried with a hot-air dryer at 70°C for 3 hours to form a sheet coated with the water-absorbent resin dispersion that was dried (water-absorbent resin coating film).

### Example 2

A sheet coated with a water-absorbent resin dispersion that was dried (water-absorbent resin coating film) was formed in the same manner as in Example 1, except that the amount of the water-absorbent resin was 20 parts by mass.

### Example 3

A sheet coated with a water-absorbent resin dispersion that was dried (water-absorbent resin coating film) was formed in the same manner as in Example 1, except that the amount of the water-absorbent resin was 40 parts by mass.

### Example 4

30 parts by mass of a viscous composition (AQUPEC-HU, produced by Sumitomo Seika Chemicals Co., Ltd.) was added to 100 parts by mass of absolute ethanol heated to 30°C, and the mixture was stirred with a paddle blade (6 cmΦ, 200 rpm) for 1 hour to prepare a thickener solution. The viscosity of the thickener solution was 650 mPa·s (B-type rotary viscometer produced by Tokimec Inc., rotor No. 2, 12 rpm, 3 min, 30°C). A water-absorbent resin (AQUA KEEP 10SH 1000 µm pass product (produced by Sumitomo Seika Chemicals Co., Ltd.), which was passed through a 1000 µm sieve) was added to the thickener solution so that the amount of the resin was 10 parts by mass, per 100 parts by mass of absolute ethanol in the thickener solution. The mixture was stirred for 10 minutes to prepare a water-absorbent resin dispersion.

This water-absorbent resin dispersion was placed on a PET sheet, and applied using 1000 µm and 80 µm bar coaters. The sheet to which the dispersion was applied was dried with a hot-air dryer at 70°C for 3 hours to form a sheet coated with the water-absorbent resin dispersion that was dried (water-absorbent resin coating film).

### Example 5

A sheet coated with a water-absorbent resin dispersion that was dried (water-absorbent resin coating film) was formed in the same manner as in Example 1, except that the amount of the water-absorbent resin was 20 parts by mass.

### Example 6

A sheet coated with a water-absorbent resin dispersion that was dried (water-absorbent resin coating film) was formed in the same manner as in Example 1, except that the amount of the water-absorbent resin was 30 parts by mass.

### Example 7

20 parts by mass of a modified polyalkylene oxide (AQUACALK, produced by Sumitomo Seika Chemicals Co., Ltd.) was added to 100 parts by mass of absolute ethanol heated to 30°C, and the mixture was stirred with a paddle blade (6 cmΦ, 200 rpm) for 1 hour to prepare a thickener solution. The viscosity of the thickener solution was 960 mPa·s (B-type rotary viscometer produced by Tokimec Inc., rotor No. 2, 12 rpm, 3 min, 30°C). A water-absorbent resin (AQUA KEEP 10SH 1000 µm pass product (produced by Sumitomo Seika Chemicals Co., Ltd.), which was passed through a 1000 µm sieve) was added to the thickener solution so that the amount of the resin was 10 parts by mass, per 100 parts by mass of absolute ethanol in the thickener solution. The mixture was stirred for 10 minutes to prepare a water-absorbent resin dispersion.

This water-absorbent resin dispersion was placed on a PET sheet, and applied using 1000 µm and 80 µm bar coaters. The sheet to which the dispersion was applied was dried with a hot-air dryer at 70°C for 3 hours to form a sheet coated with the water-absorbent resin dispersion that was dried (water-absorbent resin coating film).

It was found that a sheet coated with a water-absorbent resin coating film can be formed using the water-absorbent resin dispersion obtained in any of the Examples. In the water-absorbent resin coating film on each sheet, for example, no aggregates or white spots were found, confirming that a uniform water-absorbent resin coating film was obtained. Thus, it can be said that the water-absorbent resin dispersion obtained in each Example can maintain the dispersibility of a water-absorbent resin more readily than conventional dispersions.

## Claims

1. A water-absorbent resin dispersion comprising a water-absorbent resin, a thickener, and an organic solvent, the thickener being dissolved in the organic solvent, the water-absorbent resin being dispersed in the organic solvent.

2. The water-absorbent resin dispersion according to claim 1, wherein the organic solvent is at least one member selected from the group consisting of C₁₋₅ alcohol compounds, benzene, toluene, xylene, ethylene carbonate, propylene carbonate, tetrahydrofuran, 1,4-dioxane, acetone, methyl ethyl ketone, acetonitrile, 1,2-dichloroethane, chloroform, and dimethylformamide.

3. The water-absorbent resin dispersion according to claim 1 or 2, wherein the thickener is present in an amount of 0.5 to 50 parts by mass, per 100 parts by mass of the organic solvent.

4. The water-absorbent resin dispersion according to any one of claims 1 to 3, wherein the water-absorbent resin is present in an amount of 5 to 50 parts by mass, per 100 parts by mass of the organic solvent.

5. The water-absorbent resin dispersion according to any one of claims 1 to 4, wherein the thickener has a viscosity of 200 to 10000 mPa·s when dissolved in the organic solvent.

6. A water-absorbent resin coating film comprising the water-absorbent resin dispersion according to any one of claims 1 to 5 that is dried.

7. A method for producing a water-absorbent resin coating film, comprising drying the water-absorbent resin dispersion according to any one of claims 1 to 5 to form a coating film.
